(19) **Europäisches Patentamt / European Patent Office / Office européen des brevets**

(11) **EP 2 767 010 B1**

(12) **FASCICULE DE BREVET EUROPEEN**

(45) Date de publication et mention de la délivrance du brevet:
**30.12.2015 Bulletin 2015/53**

(21) Numéro de dépôt: **12770157.1**

(22) Date de dépôt: **12.10.2012**

(51) Int Cl.:
***H04B 7/185*** (2006.01)

(86) Numéro de dépôt international:
**PCT/EP2012/070252**

(87) Numéro de publication internationale:
**WO 2013/053884 (18.04.2013 Gazette 2013/16)**

(54) **PROCÉDÉ D'IDENTIFICATION DE RESSOURCES DE MULTIPLEXAGE RÉUTILISABLES ET SYSTÈME DE TÉLÉCOMMUNICATIONS**

VERFAHREN ZUR IDENTIFIZIERUNG VON WIEDERVERWENDBAREN MULTIPLEX MITTELN UND KOMMUNIKATIONSSYSTEM

METHOD OF IDENTIFYING REUSABLE MULTIPLEX RESOURCES AND COMMUNICATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2011 FR 1103145**

(43) Date de publication de la demande:
**20.08.2014 Bulletin 2014/34**

(73) Titulaire: **Airbus Defence and Space SAS
78130 Les Mureaux (FR)**

(72) Inventeurs:
• **TRONC, Jérôme
  F-31240 Saint Jean (FR)**
• **DESLANDES, Vincent
  F-31000 Toulouse (FR)**

(74) Mandataire: **Ipside
6, Impasse Michel Labrousse
31100 Toulouse (FR)**

(56) Documents cités:
**EP-A2- 0 820 160          WO-A2-02/065535
WO-A2-2006/065584      US-A1- 2006 205 367**

**Description**

**DOMAINE TECHNIQUE**

La présente invention appartient au domaine des télécommunications mobiles, et concerne plus particulièrement le partage de canaux fréquentiels, entre un système de télécommunications par satellite et un système de télécommunications terrestre.

**ÉTAT DE LA TECHNIQUE**

De nos jours, des canaux fréquentiels différents sont généralement alloués aux systèmes de télécommunications terrestres et aux systèmes de télécommunications par satellite, afin notamment de limiter les interférences entre ces différents systèmes.

Toutefois, les autorités de régulation de certains pays ou régions, notamment les Etats-Unis, l'Europe et la Corée du Sud, ont d'ores et déjà autorisé une réutilisation de certains canaux fréquentiels satellite par des systèmes de télécommunications terrestre. Par exemple, il a été autorisé, dans des systèmes de télécommunications, dits « systèmes intégrés », comportant à la fois une composante satellite et une composante terrestre, de réutiliser de canaux fréquentiels traditionnellement allouées aux communications par satellite (bandes L ou S) au niveau de la composante terrestre.

De tels systèmes de télécommunications intégrés sont également connus sous le nom de « systèmes hybrides satellite / terrestre ». L'intérêt de tels systèmes de télécommunications intégrés réside notamment dans la complémentarité des capacités offertes par les composantes satellite et terrestre. En particulier, la composante terrestre est généralement capable d'offrir une couverture plus dense en milieu urbain que la composante satellite, et en complément de couverture à l'intérieur des bâtiments.

De manière plus générale, il pourrait être envisagé, du fait notamment de la forte croissance du volume des télécommunications terrestres, d'autoriser une réutilisation totale ou partielle de canaux fréquentiels satellite par des systèmes de télécommunications exclusivement terrestres (c'est-à-dire ne comportant pas de composante satellite).

Toutefois, on comprend qu'une telle réutilisation de canaux fréquentiels satellite par un système de télécommunications terrestre génère des interférences entre les communications terrestres et les communications satellite, interférences qu'il convient de contrôler.

La demande de brevet US 2011/0034166 décrit un système de télécommunications intégré, ainsi que des mécanismes pour organiser le partage de mêmes canaux fréquentiels entre la composante satellite et la composante terrestre dudit système intégré.

Toutefois, les mécanismes décrits dans la demande de brevet US 2011/0034166 visent à minimiser les interférences subies dans un canal fréquentiel par un terminal terrestre du fait de l'utilisation de ce même canal fréquentiel par un satellite. Cette demande de brevet n'adresse pas le problème des interférences subies dans un canal fréquentiel par le satellite du fait de l'utilisation de ce même canal fréquentiel par la composante terrestre du système de télécommunications intégré.

Or ce problème est particulièrement important d'un point de vue pratique puisque, de nos jours, on considère principalement une réutilisation de canaux fréquentiels traditionnellement réservés aux communications par satellite pour des systèmes de télécommunications terrestres. Par conséquent, cette réutilisation doit de préférence se faire en contrôlant les interférences sur tout système existant de télécommunications par satellite.

**EXPOSÉ DE L'INVENTION**

La présente invention a pour objectif de remédier à tout ou partie des limitations des solutions de l'art antérieur, notamment celles exposés ci-avant, en proposant une solution qui permette de contrôler le niveau d'interférences subies par un satellite du fait d'une utilisation d'un canal fréquentiel satellite par un système de télécommunications terrestre.

En outre, la présente invention a également pour objectif de proposer une solution qui puisse, dans certains cas, être mise en oeuvre de façon transparente pour le système de télécommunications par satellite, sans nécessiter de coordination avec le système de télécommunications terrestre. Ceci permet d'être applicable y compris lorsque le système de télécommunications par satellite et le système de télécommunications terrestre sont indépendants l'un de l'autre.

A cet effet, et selon un premier aspect, l'invention concerne un procédé d'identification de ressources de multiplexage montantes d'un satellite multifaisceaux pouvant être utilisées dans un système de télécommunications terrestre par une station émettrice pour émettre des signaux radioélectriques vers une station réceptrice, dans lequel ladite station émettrice ou ladite station réceptrice est une station de base ayant une portée délimitant une zone de couverture, et des faisceaux différents du satellite utilisent des ressources de multiplexage montantes différentes. En outre, ledit procédé comporte, pour chaque ressource de multiplexage montante considérée, les étapes de :

- estimation d'un niveau maximal d'interférence autorisé vis-à-vis du satellite pour cette ressource de multiplexage montante pour des signaux radioélectriques émis depuis la zone de couverture,
- estimation d'un niveau potentiel d'interférence de la station émettrice se trouvant dans la zone de couverture,
- détermination si cette ressource de multiplexage montante est utilisable par la station émettrice par comparaison du niveau potentiel d'interférence de la station émettrice avec le niveau maximal d'interférence autorisé pour cette ressource de multiplexage montante.

Dans des modes particuliers de mise en oeuvre, le procédé d'identification peut comporter l'une ou plusieurs des caractéristiques suivantes, prises isolément ou suivant toutes les combinaisons possibles.

Dans un mode particulier de mise en oeuvre, pour chaque ressource de multiplexage montante considérée, l'étape d'estimation du niveau maximal d'interférence autorisé comprend les sous-étapes de :

- mesure, par un équipement terrestre se trouvant dans la zone de couverture dans des conditions de visibilité prédéterminées avec le satellite, dit « équipement de référence », du niveau de réception de signaux radioélectriques émis par le satellite dans le faisceau utilisant cette ressource de multiplexage montante, dit « niveau de réception de référence »,
- détermination du niveau maximal d'interférence autorisé pour cette ressource de multiplexage montante en fonction du niveau de réception de référence mesuré pour cette ressource de multiplexage montante.

Dans un mode particulier de mise en oeuvre, pour chaque ressource de multiplexage montante considérée :

- ledit procédé comporte une étape d'émission par le satellite, dans le faisceau utilisant cette ressource de multiplexage montante, d'un signal pilote $S_x$ spécifique associé à cette ressource de multiplexage montante,
- le niveau de réception de référence pour cette ressource de multiplexage montante correspond au niveau de réception du signal pilote $S_x$ associé à cette ressource de multiplexage montante.

Dans un mode particulier de mise en oeuvre, ledit procédé comporte, pour chaque ressource de multiplexage montante considérée, les étapes de :

- mesure du niveau d'interférence généré par des stations émettrices utilisant cette ressource de multiplexage montante, dit « niveau réel d'interférence »,
- actualisation de la puissance d'émission du signal pilote $S_x$ associé à cette ressource de multiplexage montante, au cours de laquelle ladite puissance d'émission dudit signal pilote $S_x$ est ajustée en fonction du niveau réel d'interférence mesuré pour cette ressource de multiplexage montante.

Dans un mode particulier de mise en oeuvre, l'étape d'estimation du niveau potentiel d'interférence de la station émettrice comporte les sous-étapes de:

- estimation de la puissance avec laquelle les signaux radioélectriques seront émis par la station émettrice, dite « puissance de rayonnement »,
- mesure, par la station émettrice, du niveau de réception de signaux radioélectriques émis par le satellite, dit « niveau de réception réel »,
- détermination du niveau potentiel d'interférence de la station émettrice en fonction du niveau de réception réel mesuré et de la puissance de rayonnement estimée de ladite station émettrice.

Selon un second aspect, l'invention concerne un système de télécommunications terrestres comportant une station émettrice et une station réceptrice adaptées à échanger des données en utilisant des ressources de multiplexage montantes d'un satellite multifaisceaux, ladite station émettrice ou ladite station réceptrice est une station de base ayant une portée délimitant une zone de couverture. En outre, ledit système de télécommunications terrestres comporte :

- des moyens adaptés à estimer, pour chaque ressource de multiplexage montante considérée, un niveau maximal d'interférence autorisé vis-à-vis du satellite pour des signaux radioélectriques émis depuis la zone de couverture,
- des moyens adaptés à estimer un niveau potentiel d'interférence de la station émettrice se trouvant dans la zone de couverture,
- des moyens adaptés à déterminer si une ressource de multiplexage montante est utilisable par la station émettrice par comparaison du niveau potentiel d'interférence de la station émettrice avec le niveau maximal d'interférence autorisé pour cette ressource de multiplexage montante.

Dans des modes particuliers de réalisation, le système de télécommunications terrestres peut comporter l'une ou plusieurs des caractéristiques suivantes, prises isolément ou suivant toutes les combinaisons possibles.

Dans un mode particulier de réalisation, les moyens d'estimer un niveau maximal d'interférence autorisé pour chaque ressource de multiplexage montante comportent un équipement terrestre se trouvant ou pouvant être placé dans la zone de couverture dans des conditions de visibilité prédéterminées avec le satellite, dit « équipement de référence », ledit équipement de référence comportant des moyens adaptés à mesurer des niveaux de réception de signaux radioélectriques émis dans des ressources de multiplexage descendantes du satellite.

Dans un mode particulier de réalisation, les moyens d'estimer le niveau potentiel d'interférence de la station émettrice comportent :

- des moyens adaptés à estimer la puissance de rayonnement de la station émettrice,
- des moyens adaptés à mesurer un niveau de réception par la station émettrice de signaux radioélectriques émis par le satellite, dit « niveau de réception réel »,
- des moyens adaptés à déterminer le niveau potentiel d'interférence de la station émettrice en fonction du niveau de réception réel mesuré et de la puissance de rayonnement estimée.

Selon un troisième aspect, l'invention concerne un système de télécommunications intégré comportant une composante spatiale comportant un satellite multifaisceaux et une composante terrestre conforme à un système de télécommunications terrestres selon l'un quelconque des modes de réalisation de l'invention.

Dans un mode particulier de réalisation, la composante spatiale comporte des moyens adaptés à émettre un signal pilote spécifique dans chaque faisceau du satellite.

Dans un mode particulier de réalisation, la composante spatiale comporte des moyens adaptés à actualiser la puissance d'émission de chaque signal pilote en fonction de mesures du niveau d'interférences agrégées des stations émettrices utilisant des ressources de multiplexage montantes, dit « niveau réel d'interférence », lesdits moyens étant configurés pour ajuster la puissance d'émission du signal pilote associé à une ressource de multiplexage montante en fonction du niveau réel d'interférence mesuré dans cette ressource de multiplexage montante.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un système de télécommunications intégré,
- Figure 2 : une représentation schématique des principaux chemins d'interférence liés à la réutilisation de canaux fréquentiels satellite,
- Figure 3 : un exemple d'utilisation de différents canaux fréquentiels par un satellite multifaisceaux,
- Figure 4 : un diagramme représentant les principales étapes d'un procédé d'identification de canaux fréquentiels satellite utilisables pour des communications terrestres,
- Figure 5 : un diagramme de rayonnement d'un faisceau de satellite,
- Figure 6 : un exemple illustrant la variation d'un niveau maximal d'interférence autorisé d'un canal fréquentiel à un autre,
- Figure 7 : un diagramme représentant un mode préféré de mise en oeuvre d'une étape d'estimation de niveau maximal d'interférence autorisé vis-à-vis d'un satellite,
- Figure 8 : un exemple illustrant l'utilisation de signaux pilotes pour l'estimation de niveaux maximaux d'interférence autorisés,
- Figure 9 : un exemple illustrant la variation du niveau potentiel d'interférence d'un terminal terrestre,
- Figure 10 : un diagramme représentant un mode préféré de mise en oeuvre d'une étape d'estimation du niveau potentiel d'interférence d'un terminal terrestre,
- Figure 11 : un diagramme représentant un mode préféré de mise en oeuvre du procédé d'identification,
- Figure 12 : un diagramme représentant un mode préféré de mise en oeuvre d'une étape d'actualisation du procédé d'identification de la figure 11,
- Figure 13 : un exemple illustrant l'allocation de canaux fréquentiels satellite montants à des terminaux terrestres.

Dans ces figures, des références identiques d'une figure à une autre désignent des éléments identiques ou analogues. Pour des raisons de clarté, les éléments représentés ne sont pas à l'échelle, sauf mention contraire.

**DESCRIPTION DÉTAILLÉE DE L'INVENTION**

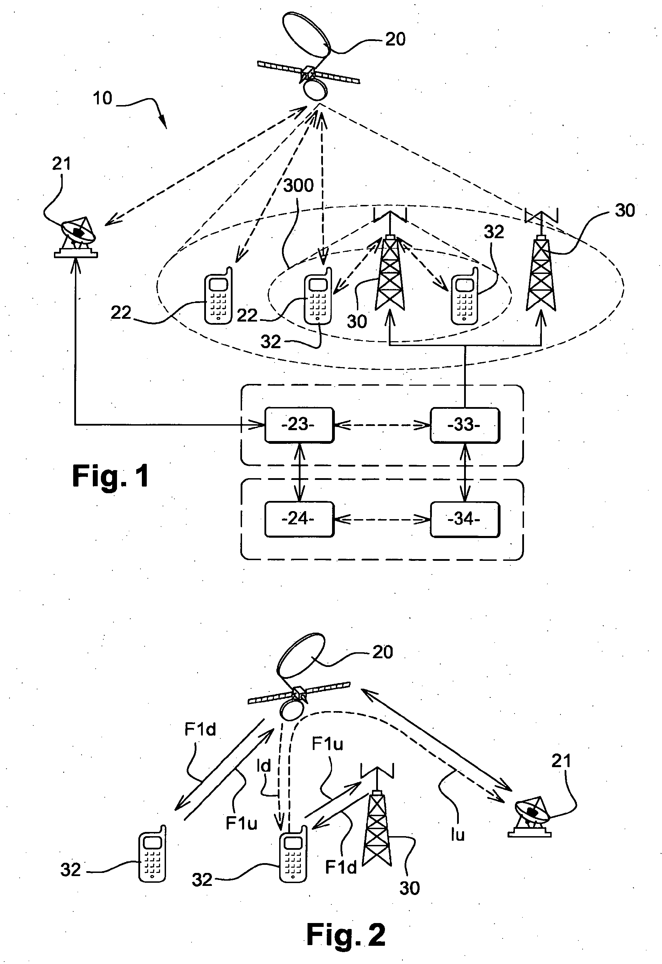

La figure 1 représente schématiquement un exemple de système 10 de télécommunications intégré comportant une composante satellite et une composante terrestre.

La composante satellite comporte un satellite 20 en orbite au-dessus de la Terre, par exemple en orbite géostationnaire (GEO).

Le satellite 20 est un satellite multifaisceaux. Un faisceau correspond à un diagramme de rayonnement particulier du satellite 20, permettant de desservir une zone géographique particulière à la surface de la Terre. Un satellite multifaisceaux est adapté à former une pluralité de tels faisceaux, et par conséquent à desservir simultanément une pluralité de zones géographiques différentes.

La composante satellite comporte également des terminaux se trouvant sensiblement à la surface de la Terre, adaptés à échanger des données avec le satellite 20 sous la forme de signaux radioélectriques.

On entend par terminaux « sensiblement à la surface de la Terre », notamment les terminaux d'utilisateurs terrestres, maritimes ou aéronautiques.

On entend en outre par « signal radioélectrique » une onde électromagnétique se propageant via des moyens non filaires, dont les fréquences sont comprises dans le spectre traditionnel des ondes radioélectriques (quelques hertz à plusieurs centaines de gigahertz) ou dans des bandes de fréquences voisines.

Le satellite 20 échange des données avec une station sol 21, sous la forme de signaux radioélectriques. Les données échangées correspondent à des données reçues des terminaux ou à destination desdits terminaux.

La composante satellite comporte également un réseau d'accès satellite 23 et un coeur de réseau satellite 24 auxquels les terminaux accèdent par l'intermédiaire du satellite 20 et de la station sol 21.

La composante terrestre comporte plusieurs stations de base 30, ainsi que des terminaux sensiblement à la surface de la terre et adaptés à échanger des données avec lesdites stations de base 30.

Plus particulièrement, chaque station de base 30 est adaptée à échanger des données avec des terminaux se trouvant dans une zone de couverture de cette station de base 30, sensiblement délimitée par la portée de cette station de base. Une telle zone de couverture est connue sous le nom de « cellule » dans les systèmes de télécommunications cellulaires (GSM, UMTS, CDMA 2000, LTE, etc.).

La composante terrestre comporte également un réseau d'accès terrestre 33 et un coeur de réseau terrestre 34 auxquels les terminaux accèdent par l'intermédiaire des stations de base 30.

Le réseau d'accès terrestre 33 et le réseau d'accès satellite 23 peuvent être confondus ou comporter des équipements communs partagés. De même le coeur de réseau terrestre 34 et le coeur de réseau satellite 24 peuvent être confondus ou comporter des équipements communs partagés.

Les terminaux du système 10 de télécommunications intégré peuvent être de plusieurs types.

Dans la suite de la description, on entend par « terminal satellite » 22 :

- un terminal compatible uniquement avec la composante satellite, c'est-à-dire un terminal qui n'est pas apte à échanger des données avec les stations de base 30 de la composante terrestre, ou
- un terminal bi-mode (compatible avec la composante satellite et avec la composante terrestre) qui est en cours de communication avec le satellite 20.

En outre, on entend par « terminal terrestre » 32 :

- un terminal compatible uniquement avec la composante terrestre, c'est-à-dire un terminal qui n'est pas apte à échanger des données avec le satellite 20 de la composante satellite, ou
- un terminal bi-mode qui est en cours de communication avec une station de base 30.

Tel qu'indiqué précédemment, l'invention concerne l'utilisation de canaux fréquentiels satellite pour des communications terrestres, c'est-à-dire pour des communications par l'intermédiaire d'une station de base 30 de la composante terrestre.

L'invention vise en premier lieu à contrôler les interférences subies par le satellite 20 du fait qu'un canal fréquentiel satellite, utilisé dans la composante satellite, est également utilisé dans la composante terrestre.

En pratique, les interférences subies par le satellite 20 seront maximales lorsque des signaux radioélectriques seront émis dans un canal fréquentiel montant du satellite 20, c'est-à-dire utilisé par le satellite pour recevoir des données de terminaux satellite 20 et/ou de la station sol 21.

Dans la suite de la description, on se place de manière non limitative dans le cas où le satellite 20 utilise des canaux fréquentiels différents pour les communications montantes (d'un terminal satellite 22 ou d'une station sol 21 vers le satellite 20) et pour les communications descendantes (du satellite 20 vers un terminal satellite 22 ou une station sol 21). Ce multiplexage fréquentiel des communications montantes et descendantes est connu sous l'acronyme FDD pour « Frequency Division Duplex ».

Dans toute la présente demande, on entend par « station émettrice » un équipement de la composante terrestre susceptible d'émettre des signaux radioélectriques dans un canal fréquentiel satellite montant. Suivant la façon de réutiliser les canaux fréquentiels satellite pour les communications terrestres, la station émettrice correspondra soit à un terminal terrestre 32, soit à une station de base 30.

La figure 2 représente schématiquement un exemple de réutilisation des canaux fréquentiels satellite pour les communications terrestres, dans lequel la même organisation des canaux fréquentiels satellite est conservée pour les communications terrestres. On entend par là qu'un canal fréquentiel utilisé pour les communications satellite montantes (respectivement descendantes) ne peut être utilisé que pour les communications terrestres montantes (respectivement descendantes).

Tel qu'illustré par la figure 2, un terminal satellite 22 échange des données avec un satellite 20 par l'intermédiaire d'un canal fréquentiel F1 u pour les communications montantes et un canal fréquentiel F1d pour les communications descendantes. De manière analogue, un terminal terrestre 32 échange des données avec une station de base 30 par l'intermédiaire dudit canal fréquentiel F1 u pour les communications montantes et dudit canal fréquentiel F1d pour les communications descendantes.

Dans ces conditions, la station émettrice correspond au terminal terrestre 32 (chemin d'interférences Iu), la station de base 30 étant alors une station réceptrice. En outre, le satellite 20 est également susceptible de créer des interférences importantes au niveau du terminal terrestre 32 dans le canal fréquentiel F1d (chemin d'interférence Id).

On comprend que d'autres exemples, dans lesquels l'organisation des canaux fréquentiels satellite n'est pas conservée pour les communications terrestres, sont possibles. Par exemple, l'utilisation des canaux fréquentiels peut être inversée en ce qu'un canal fréquentiel satellite montant (respectivement descendant) est réutilisé pour des communications terrestres descendantes (respectivement montantes). Dans un tel cas, la station émettrice est la station de base 30.

Dans la suite de la description, on se place de manière non limitative dans le cas où un canal fréquentiel utilisé pour les communications satellite montantes (respectivement descendantes) ne peut être utilisé que pour les communications terrestres montantes (respectivement descendantes).

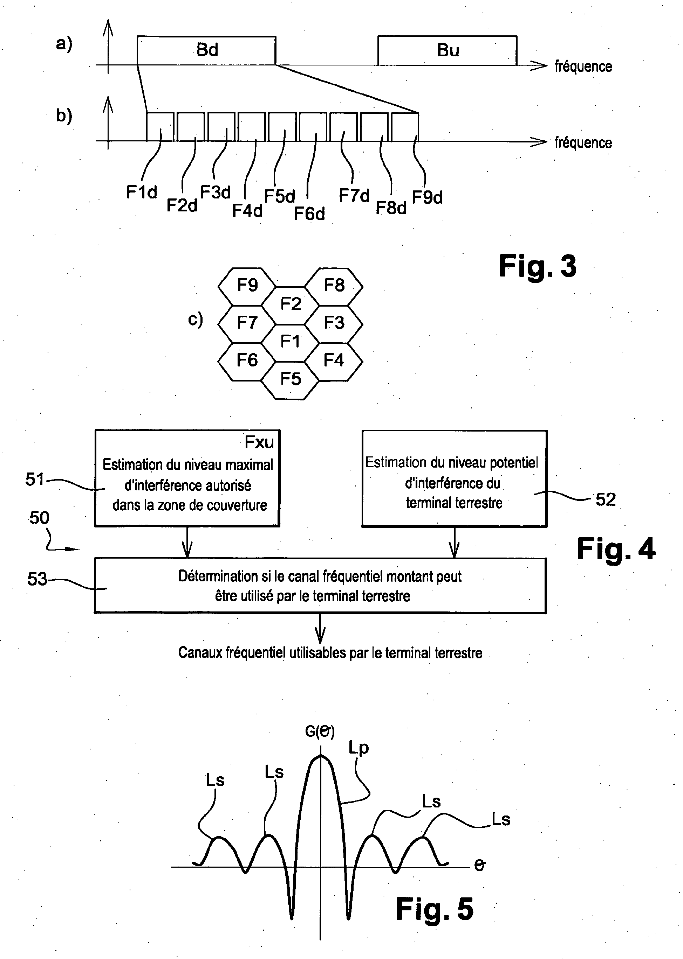

La figure 3 représente schématiquement un exemple d'utilisation des différents canaux fréquentiels par le satellite 20.

La partie a) de la figure 3 représente deux bandes fréquentielles : une première bande fréquentielle Bd utilisée pour les communications satellite descendantes et une seconde bande fréquentielle Bu utilisée pour les communications satellite montantes.

La partie b) de la figure 3 représente l'organisation en canaux fréquentiels de la première bande fréquentielle Bd, qui comprend neuf canaux fréquentiels F1d à F9d.

De manière analogue, la seconde bande fréquentielle Bu est également organisée en neuf canaux fréquentiels F1 u à F9u, associés respectivement aux canaux fréquentiels F1d à F9d. Ainsi la communication montante associée à une communication descendante utilisant le canal fréquentiel F1d s'effectue sur le canal fréquentiel F1u, la communication montante associée à une communication descendante utilisant le canal fréquentiel F2d s'effectue sur le canal fréquentiel F2u, etc.

Dans la suite de la description, on désigne par « canal fréquentiel F1 » la paire de canaux fréquentiels (F1d, F1u), par « canal fréquentiel F2 » la paire de canaux fréquentiels (F2d, F2u), etc.

La partie c) de la figure 3 représente un exemple de l'organisation en motif des faisceaux du satellite 20. Plus particulièrement, la partie c) de la figure 3 représente l'empreinte au sol de chacun des faisceaux du satellite.

Dans cet exemple, des faisceaux différents du satellite 20 utilisent des canaux fréquentiels différents, afin de limiter les interférences entre faisceaux. Le motif de faisceaux de la partie c) de la figure 3 comporte à titre d'exemple non limitatif neuf faisceaux, chaque faisceau utilisant un canal fréquentiel spécifique parmi les canaux fréquentiels F1 à F9. Rien n'exclut pour le satellite 20 d'utiliser des motifs différents de celui illustré par la partie c) de la figure 3. En outre, plusieurs motifs identiques ou différents peuvent être juxtaposés. Dans ce cas, deux faisceaux différents du satellite 20 peuvent utiliser un même canal fréquentiel, toutefois, deux faisceaux adjacents utilisent des canaux fréquentiels différents. Il est à noter en outre que les motifs peuvent être statiques ou dynamiques.

Procédé d'identification de canaux fréquentiels réutilisables

La présente invention concerne un procédé 50 d'identification visant à déterminer, au niveau de la composante terrestre, quels canaux fréquentiels satellite peuvent être utilisés pour des communications terrestres sans générer d'interférences perturbant le satellite 20.

Plus particulièrement, le procédé 50 d'identification vise à déterminer quels canaux fréquentiels satellite montants peuvent être utilisés par un terminal terrestre 32 (c'est-à-dire la station émettrice) pour communiquer avec la station de base 30 (c'est-à-dire la station réceptrice) dans la zone de couverture 300 de laquelle se trouve ledit terminal terrestre.

Il est à noter qu'un canal fréquentiel se décompose généralement en plusieurs blocs de ressources. Un bloc de ressources correspond à l'unité minimale de ressources allouée à un terminal terrestre. Ainsi, suivant la technologie considérée de multiplexage des différents terminaux terrestres, un bloc de ressources correspondra par exemple à un sous-canal fréquentiel particulier du canal fréquentiel considéré (FDMA ou « Frequency Division Multiple Access ») et/ou un intervalle de temps particulier (TDMA ou « Time Division Multiple Access ») et/ou un code d'étalement particulier (CDMA ou « Code Division Multiple Access »), etc.

Ainsi, une fois un canal fréquentiel satellite montant considéré comme utilisable par un terminal terrestre 32, celui-ci pourra se voir allouer un bloc de ressources particulier sur ce canal fréquentiel.

Il est à noter que, lorsque la composante terrestre utilise le même découpage en blocs de ressources que la composante satellite, le procédé selon l'invention peut être mis en oeuvre pour identifier directement quels blocs de ressources d'un canal fréquentiel donné peuvent être utilisés par un terminal terrestre 32. Pour les besoins de la description de modes de mise en oeuvre de l'invention, on se place de manière non limitative dans le cas où le procédé est mis en oeuvre pour identifier les canaux fréquentiels satellite montants utilisables pour les communications terrestres, sans chercher à distinguer les blocs de ressources d'un même canal fréquentiel.

La figure 4 représente schématiquement les principales étapes d'un tel procédé 50 d'identification, lesquelles sont, pour un canal fréquentiel satellite montant Fxu (x = 1 à 9) dont on cherche à déterminer s'il peut être utilisé pour les communications terrestres :

- 51 estimation d'un niveau maximal d'interférence autorisé vis-à-vis du satellite 20 dans ce canal fréquentiel montant pour des signaux radioélectriques émis depuis la zone de couverture 300 de la station de base 30,
- 52 estimation d'un niveau potentiel d'interférence du terminal terrestre 32,
- 53 détermination si le canal fréquentiel montant est utilisable par le terminal terrestre 32, par comparaison du niveau potentiel d'interférence dudit terminal terrestre 32 avec le niveau maximal d'interférence autorisé dans ce canal fréquentiel montant.

Il est à noter que, si les étapes 51 et 53 sont exécutées pour chaque canal fréquentiel montant considéré, l'étape 52 d'estimation de niveau potentiel d'interférence peut n'être exécutée qu'une fois pour tous les canaux fréquentiels montants considérés, dans la mesure où le niveau potentiel d'interférence dépend principalement du terminal terrestre 32 considéré. L'étape 52 d'estimation de niveau potentiel d'interférence doit par contre être exécutée pour chaque terminal terrestre considéré.

Du fait de l'estimation d'un niveau maximal d'interférence autorisé dans un canal fréquentiel montant, et de l'estimation dû niveau potentiel d'interférence du terminal terrestre 32, il sera possible de mieux contrôler les interférences subies par le satellite 20. En effet, un canal fréquentiel montant, pour lequel un terminal terrestre 32 générerait un niveau d'interférence supérieur au niveau maximal d'interférence autorisé dans ce canal fréquentiel montant, ne pourra pas être utilisé par ce terminal terrestre 32.

En pratique, les niveaux maximaux d'interférence autorisés dans chacun des canaux fréquentiels montants et le niveau potentiel d'interférence du terminal terrestre 32 pourront être estimés en fonction de mesures effectuées exclusivement par des équipements terrestres de la composante terrestre, et en fonction de paramètres pouvant être prédéfinis. En particulier, ces estimations pourront être effectuées sans que le satellite 20 n'effectue de mesures particulières (sauf éventuellement pour influencer la valeur d'un niveau maximal d'interférence autorisé) et sans coordination particulière avec ledit satellite.

<u>Estimation de niveau maximal d'interférence autorisé</u>

Le niveau maximal d'interférence autorisé dans un canal fréquentiel montant est représentatif de la puissance maximale autorisée dans ce canal fréquentiel montant avant la formation du faisceau utilisant ce canal fréquentiel montant, ladite formation de faisceau réalisant un filtrage dont la réponse correspond au diagramme de rayonnement (ou gain d'antenne) associé à ce faisceau.

On comprend donc que le niveau maximal d'interférence autorisé dans un canal fréquentiel satellite montant va dépendre de la direction d'arrivée au niveau du satellite 20 des signaux radioélectriques émis par le terminal terrestre 32 dans la zone de couverture 300. Plus particulièrement, le niveau maximal d'interférence autorisé dans un canal fréquentiel satellite montant va dépendre de l'écart angulaire entre ladite direction d'arrivée et une direction de gain maximal du diagramme de rayonnement associé au faisceau utilisant ce canal fréquentiel satellite montant.

La figure 5 représente schématiquement un exemple de diagramme de rayonnement d'un faisceau.

Plus particulièrement, la figure 5 représente le gain d'antenne $G(\theta)$ introduit en fonction de l'écart angulaire $\theta$ entre la direction de gain maximal et la direction d'arrivée de signaux radioélectriques. On constate que le diagramme de rayonnement présente plusieurs lobes de rayonnement :

- un lobe principal Lp dont l'empreinte au sol correspond sensiblement à la zone géographique desservie par le faisceau,
- des lobes secondaires Ls, d'amplitude inférieure à celle dudit lobe principal Lp.

De manière générale, on constate que, en moyenne, plus l'écart angulaire θ augmente (c'est-à-dire plus la zone de couverture 300 de la station de base 30 est éloignée de la zone géographique desservie par le faisceau considéré) plus le gain d'antenne G(θ) diminue. Ainsi, la formation de faisceau est telle que les signaux radioélectriques émis en dehors de la zone géographique desservie par le faisceau considéré sont davantage atténués que des signaux radioélectriques émis depuis cette zone géographique.

Par exemple, le niveau maximal d'interférence autorisé dans le canal fréquentiel montant Fxu (x = 1 à 9) est déterminé comme étant égal à une constante près à l'expression en décibels (dB) suivante :

$$IPP_{MAX}(Fxu, \theta_{Fx}) = I_{REF} - G_{EST}(Fxu, \theta_{Fx}) \qquad (1)$$

expression dans laquelle :

- $\theta_{Fx}$ est l'écart angulaire entre la direction de gain maximal du faisceau utilisant le canal fréquentiel Fx et la direction d'arrivée de signaux radioélectriques émis depuis la zone de couverture 300,
- $IPP_{MAX}(Fxu, \theta_{Fx})$ est le niveau maximal d'interférence autorisé dans le canal fréquentiel montant Fxu pour des signaux radioélectriques arrivant avec l'écart angulaire $\theta_{Fx}$,
- $I_{REF}$ est un niveau prédéterminé d'interférence autorisé après formation du faisceau, dit « niveau d'interférence de référence »,
- $G_{EST}(Fxu, \theta_{Fx})$ est l'estimation du gain d'antenne $G(Fxu, \theta_{Fx})$ introduit par la formation du faisceau associé au canal fréquentiel montant Fxu pour des signaux radioélectriques arrivant avec l'écart angulaire $\theta_{Fx}$.

La valeur $I_{REF}$ est par exemple prédéfinie de sorte que le rapport signal sur interférence (C/I) après formation de faisceau demeure supérieur à une valeur seuil prédéfinie au-dessus de laquelle les performances des communications satellite montantes sont peu dégradées. Il peut en outre être prévu une marge de sécurité pour tenir compte d'une agrégation possible d'interférences générées par des terminaux terrestres différents. Le choix d'une valeur adaptée, en fonction des performances requises, est considéré comme à la portée de l'homme de l'art.

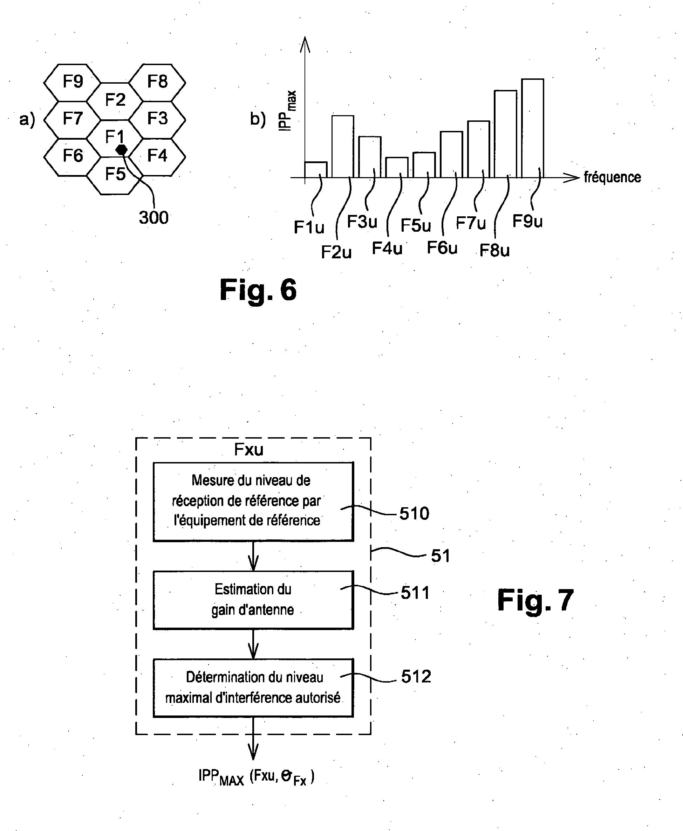

La partie a) de la figure 6 représente la même organisation de faisceaux que la partie c) de la figure 3, ainsi que la zone de couverture 300 de la station de base 30, zone de couverture dont les dimensions sont inférieures à celles des zones géographiques desservies par les faisceaux du satellite.

La zone de couverture 300 considérée se trouve dans la zone géographique desservie par le faisceau utilisant le canal fréquentiel F1. La zone géographique la plus proche de la zone de couverture 300 est, après celle desservie par le faisceau utilisant le canal fréquentiel F1, celle desservie par le faisceau utilisant le canal fréquentiel F4. La zone géographique la plus éloignée de la zone de couverture 300 de la station de base 30 est celle desservie par le faisceau utilisant le canal fréquentiel F9.

La partie b) de la figure 6 représente les niveaux maximaux d'interférences autorisés pour chacun des canaux fréquentiels F1 u à F9u. On constate que le niveau maximal d'interférence autorisé le plus faible est obtenu pour le canal fréquentiel F1 u, dans la mesure où la zone de couverture 300 de la station de base 30 se trouve dans la zone géographique desservie par le faisceau utilisant le canal fréquentiel F1. Ensuite, le niveau maximal d'interférence autorisé immédiatement supérieur est obtenu pour le canal fréquentiel F4u, etc. Le niveau maximal d'interférence autorisé le plus élevé est obtenu pour le canal fréquentiel F9u.

Dans un mode préféré de mise en oeuvre, les niveaux maximaux d'interférence autorisés sont estimés en fonction de mesures effectuées par un équipement terrestre, dit «équipement de référence », se trouvant dans la zone de couverture 300 de la station de base dans des conditions prédéterminées de visibilité avec le satellite 20,

Par « conditions prédéterminées de visibilité », on entend que l'équipement de référence se trouve sensiblement dans des conditions de visibilité directe avec le satellite 20 ou, du moins, que la différence entre, d'une part l'atténuation dans des conditions visibilité directe et, d'autre part, l'atténuation entre le satellite et l'équipement de référence, est connue a priori.

Par « sensiblement dans des conditions de visibilité directe », on entend qu'aucun obstacle ne se trouve entre ledit équipement de référence et le satellite 20, de sorte que le canal de propagation radioélectrique entre ledit satellite et ledit équipement de référence est essentiellement mono-trajet. C'est par exemple le cas si l'équipement de référence se trouve à ciel ouvert et, dans le cas d'une zone de couverture 300 en milieu urbain, en hauteur (par exemple sur le toit d'un bâtiment, sur un pylône, etc.).

L'intérêt de se placer dans des conditions prédéterminées de visibilité avec le satellite 20, réside dans le fait que, l'atténuation entre le satellite 20 et l'équipement de référence étant alors essentiellement connue ou déterminable, il sera possible d'estimer le gain d'antenne de chaque faisceau pour des signaux radioélectriques émis depuis la zone de couverture 300 de la station de base 30. Lorsque l'on se place en outre dans des conditions de visibilité directe avec le satellite 20, le canal de propagation alors est essentiellement mono-trajet et peu sélectif en fréquence, contrairement aux canaux de propagation multi-trajets qui peuvent être très sélectifs en fréquence, et pour lesquels l'atténuation introduite pourrait varier d'un canal fréquentiel à un autre.

De préférence, l'équipement de référence est la station de base 30, ou utilise des moyens de ladite station de base 30. En effet, la station de base 30 est immobile et se trouve le plus souvent sensiblement dans des conditions de visibilité directe avec le satellite 20. Suivant d'autres exemples, l'équipement de référence est un équipement pouvant être déplacé d'une zone de couverture d'une station de base 30 à une autre pour effectuer, de préférence dans des conditions de visibilité directe avec le satellite 20, des mesures utilisées pour estimer les niveaux maximaux d'interférence autorisés dans chacune de ces zones de couverture.

Dans un mode préféré de mise en oeuvre, illustré par la figure 7, l'étape 51 d'estimation du niveau d'interférence maximal autorisé comporte, pour chaque canal fréquentiel montant considéré, les sous-étapes de :

- 510 mesure par l'équipement de référence du niveau de réception de signaux radioélectriques émis par le satellite 20 dans le faisceau utilisant le canal fréquentiel montant considéré, dit « niveau de réception de référence »,
- 511 estimation du gain d'antenne introduit, par la formation du faisceau utilisant le canal fréquentiel montant considéré, pour des signaux radioélectriques émis depuis la zone de couverture 300,
- 512 détermination du niveau maximal d'interférence autorisé pour le canal fréquentiel montant considéré en fonction du niveau de réception de référence mesuré.

Dans la suite de la description, on se place de manière non limitative dans le cas où l'équipement terrestre est la station de base 30 et que celle-ci se trouve dans des conditions de visibilité directe avec le satellite 20.

Les niveaux de réception de référence mesurés dans chacun des canaux fréquentiels satellite descendants F1d à F9d au cours de sous-étapes 510 de mesure peuvent par exemple s'exprimer en décibels sous la forme suivante :

$$P_{LOS}(Fxd) = P_{TX\_REF} + G(Fxd, \theta_{Fx}) + ATT_{LOS}$$

expression dans laquelle :

- $\theta_{Fx}$ est l'écart angulaire entre la direction de gain maximal du faisceau utilisant le canal fréquentiel Fx (x = 1 à 9) et la direction de signaux radioélectriques à destination de la zone de couverture 300 de la station de base 30,
- $P_{LOS}(Fxd)$ est le niveau de réception en visibilité directe mesuré par la station de base 30 dans le canal fréquentiel descendant Fxd,
- $P_{TX\_REF}$ est la puissance d'émission de référence du satellite 20,
- $G(Fxd, \theta_{Fx})$ est le gain d'antenne introduit par le faisceau associé au canal fréquentiel Fxd pour des signaux radioélectriques à destination de la zone de couverture 300,
- $ATT_{LOS}$ est l'atténuation en conditions de visibilité directe entre le satellite 20 et la station de base 30, considérée comme connue a priori de la composante terrestre (exprimée en dB, la valeur de $ATT_{LOS}$ est négative).

De manière non limitative, on considère que la puissance d'émission de référence $P_{TX\_REF}$ est la même dans tous les faisceaux du satellite 20, et qu'elle est en outre connue de la composante terrestre. Rien n'exclut, suivant un autre exemple non limitatif, de calculer les niveaux maximaux d'interférence autorisés à la puissance d'émission de référence $P_{TX\_REF}$ près.

Le gain d'antenne $G(Fxu, \theta_{Fx})$ est estimé, au cours de la sous-étape 511, en considérant que les atténuations dans le canal fréquentiel descendant sont les mêmes que celles dans le canal fréquentiel montant. Cette approximation peut être valablement faite notamment du fait que, les mesures étant réalisées dans des conditions de visibilité directe, le canal de propagation est peu sélectif en fréquence. On considère en outre que le gain d'antenne est le même en émission qu'en réception, c'est-à-dire $G(Fxu, \theta_{Fx}) = G(Fxd, \theta_{Fx})$.

Le gain d'antenne $G(Fxu, \theta_{Fx})$ est alors par exemple estimé suivant l'expression suivante :

$$G_{EST}(Fxu, \theta_{Fx}) = P_{LOS}(Fxd) - P_{TX\_REF} - ATT_{LOS} \qquad (2)$$

Les niveaux maximaux d'interférence autorisés sont par exemple déterminés, au cours de la sous-étape 512, suivant l'expression (1) donnée précédemment.

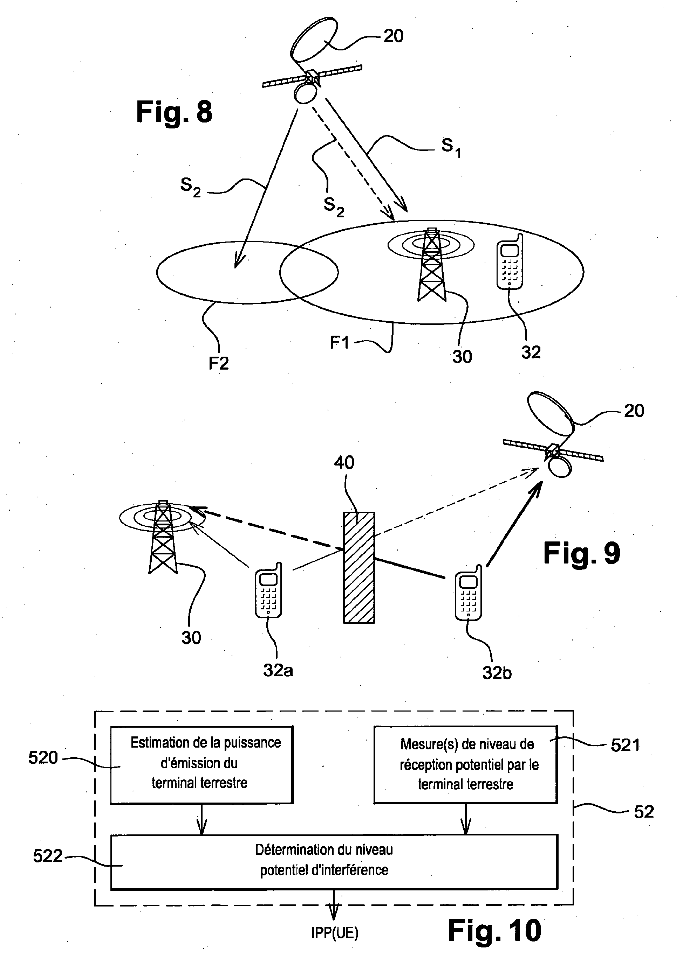

De manière générale, la station de base 30 peut mesurer le niveau de réception de tout signal radioélectrique émis par le satellite 20. Dans un mode préféré de mise en oeuvre, illustré par la figure 8, des signaux pilotes $S_x$ (x = 1 à 9 dans le cas non limitatif du motif à neuf faisceaux illustré par la partie c) de la figure 3) spécifiques prédéfinis sont associés à chacun des faisceaux et, le procédé 50 d'identification comporte, dans chaque faisceau, une étape 54 d'émission du signal pilote $S_x$ prédéfini associé à chaque faisceau.

Dans l'exemple illustré par la figure 8, un signal pilote $S_1$ est émis par le satellite 20 dans le faisceau utilisant le canal fréquentiel F1, et un signal pilote $S_2$ est émis par le satellite 20 dans le faisceau utilisant le canal fréquentiel F2. La station de base 30 et sa zone de couverture 300 se trouvent dans la zone géographique desservie par le faisceau utilisant le canal fréquentiel F1, de sorte que le niveau de réception mesuré pour le signal pilote $S_2$ est inférieur à celui mesuré pour le signal pilote $S_1$.

Ces signaux pilotes doivent pouvoir être distingués au niveau de la station de base 30 (ou, de manière plus générale, au niveau de l'équipement de référence), afin de pouvoir distinguer les différents faisceaux.

En outre, la correspondance entre, d'une part, un signal pilote donné et, d'autre part, le ou les canaux fréquentiels utilisés dans le faisceau associé à ce signal pilote, doit être préalablement mémorisée dans une mémoire non volatile de la composante terrestre (par exemple dans la station de base 30) afin de pouvoir déterminer pour quels canaux fréquentiels les niveaux maximaux d'interférence autorisés ont été mesurés (par exemple déterminer lorsque l'on mesure le niveau de réception du signal pilote $S_1$ que cette mesure est effectuée pour le canal fréquentiel F1, etc.).

Les signaux pilotes $S_x$ (x = 1 à 9) peuvent prendre toute forme adaptée à leur distinction par la station de base 30. Par exemple, deux signaux pilotes différents peuvent utiliser deux canaux fréquentiels satellite descendants différents, et/ou deux codes d'étalement différents (technique connue sous l'acronyme CDMA pour « Code Division Multiple Access »), etc.

Estimation du niveau potentiel d'interférence du terminal terrestre

Les principaux paramètres qui influent sur le niveau potentiel d'interférence du terminal terrestre 32 sont illustrés par la figure 9.

La figure 9 représente de façon schématique une station de base 30, un satellite 20 et deux terminaux terrestres : un premier terminal terrestre 32a et un second terminal terrestre 32b. Un obstacle 40 atténue fortement les signaux radioélectriques entre le premier terminal terrestre 32a et le satellite 20, et les signaux radioélectriques entre le second terminal terrestre 32b et la station de base 30 (des signaux radioélectriques fortement atténués sont représentés de façon schématique sur la figure 9 par des traits discontinus).

Les signaux radioélectriques entre le second terminal terrestre 32b et le satellite 20 sont peu atténués, ledit second terminal terrestre se trouvant par exemple sensiblement dans des conditions de visibilité directe avec ledit satellite 20. Du fait de cette faible atténuation, les signaux radioélectriques émis par le second terminal terrestre 32b sont susceptibles de générer des interférences importantes au niveau du satellite 20.

En outre, les signaux radioélectriques entre le second terminal terrestre 32b et la station de base 30 étant fortement atténués, le second terminal terrestre 32b est susceptible d'émettre avec une puissance élevée, afin de compenser cette forte atténuation. Ceci contribue également à générer des interférences importantes au niveau du satellite 20. Par conséquent, le niveau potentiel d'interférence du second terminal terrestre 32b est élevé.

A contrario, le niveau d'interférence potentiel du premier terminal terrestre 32a est plus faible, dans la mesure où :

- les signaux radioélectriques sont peu atténués entre le premier terminal terrestre 32a et la station de base 30, de sorte que la puissance d'émission du premier terminal terrestre 32a pourra être inférieure à celle du second terminal terrestre 32b,
- les signaux radioélectriques sont davantage atténués entre le premier terminal terrestre 32a et le satellite 20, qu'entre le second terminal terrestre 32b et ledit satellite.

Il en ressort que le niveau potentiel d'interférence d'un terminal terrestre 32 dépend principalement de l'atténuation entre ce terminal terrestre 32 et le satellite 20, et de la puissance d'émission dudit terminal terrestre.

Dans un mode préféré de mise en oeuvre, illustré par la figure 10, l'étape 52 d'estimation du niveau potentiel d'interférence du terminal terrestre 32 comporte les sous-étapes de :

- 520 estimation de la puissance avec laquelle les signaux radioélectriques seront émis par le terminal terrestre 32 vers la station de base 30, dite « puissance de rayonnement »,
- 521 mesure, par le terminal terrestre 32, du niveau de réception de signaux radioélectriques émis par le satellite 20 dans des canaux fréquentiels descendants, dit « niveau de réception réel »,

- 522 détermination du niveau potentiel d'interférence du terminal terrestre 32 en fonction du niveau de réception réel mesuré et de la puissance de rayonnement estimée dudit terminal terrestre.

La puissance de rayonnement du terminal terrestre 32 peut être estimée de plusieurs façons, et on comprend que le choix d'un algorithme particulier ne constitue qu'une variante d'implémentation de l'invention.

Suivant un premier exemple non limitatif, un protocole d'échange d'informations est prévu par lequel le terminal terrestre 32 notifie à la station de base 30 et au réseau d'accès terrestre la puissance de rayonnement avec laquelle des signaux radioélectriques sont susceptibles d'être émis. La puissance de rayonnement communiquée est par exemple la puissance maximale de rayonnement (pour se placer dans le pire cas pour ce qui est de la génération d'interférences) ou, si une communication préalable a eu lieu avec la station de base 30 (par exemple dans un canal fréquentiel réservé aux communications terrestres), la puissance de rayonnement avec laquelle les signaux radioélectriques ont été émis au cours de cette communication terrestre préalable.

Suivant un second exemple non limitatif, applicable dans le cas d'une communication terrestre préalable avec la station de base 30, le terminal terrestre 32 mesure le niveau de réception de signaux radioélectriques émis par la station de base 30 et notifie le niveau mesuré à ladite station de base 30 sous la forme d'un indicateur de qualité du canal (connu sous l'acronyme CQI pour « Channel Quality Indicator »). De tels mécanismes de notification du niveau mesuré sont déjà prévus dans les principaux systèmes de télécommunications terrestres. En outre, la station de base 30, qui connaît sa propre puissance de rayonnement, peut déduire du niveau mesuré par le terminal terrestre 32 l'atténuation entre ledit terminal terrestre et ladite station de base. En mesurant le niveau de réception des signaux radioélectriques émis par le terminal terrestre 32, la station de base 30 peut estimer la puissance de rayonnement dudit terminal terrestre, compte tenu de l'atténuation entre ledit terminal terrestre et ladite station de base.

Rien n'exclut en outre, suivant d'autres exemples, que le niveau potentiel d'interférence soit estimé directement par le terminal terrestre 32, auquel cas celui-ci, qui effectue déjà la mesure du niveau de réception réel, peut déterminer directement sa propre puissance d'émission.

De préférence, des signaux pilotes $S'_x$ ($x = 1$ à 9) spécifiques prédéfinis sont associés à chacun des faisceaux et, dans chaque faisceau, le satellite 20 comporte une étape 55 d'émission du signal pilote prédéfini associé à chaque faisceau. Avantageusement, les signaux pilotes $S'_x$ sont les mêmes que ceux utilisés pour mesurer les niveaux maximaux d'interférences autorisés, c'est-à-dire les signaux pilotes $S_x$ illustrés par la figure 8.

Le terminal terrestre 32 mesure alors les niveaux de réception pour chaque signal pilote et choisit un signal pilote de référence $S_{REF}$ comme étant le signal pilote $S'_x$ pour lequel le niveau de réception maximal a été mesuré. Le niveau de réception réel est alors estimé comme étant le niveau de réception mesuré pour ledit signal pilote de référence.

Le niveau de réception réel peut alors s'exprimer en dB sous la forme suivante :

$$P_{REEL} = P'_{TX\_REF} + G(S_{REF}, \theta_{REF}) + ATT_{REEL}(UE)$$

expression dans laquelle :

- $P_{REEL}$ est le niveau de réception réel pour le terminal terrestre 32,
- $P'_{TX\_REF}$ est la puissance d'émission de référence du satellite 20 pour l'émission des signaux pilotes $S'_x$ ($x = 1$ à 9),
- $\theta_{REF}$ est l'écart angulaire entre la direction de gain maximal du faisceau dans lequel est émis le signal pilote de référence $S_{REF}$ et la direction de signaux radioélectriques à destination de la zone de couverture 300 de la station de base 30,
- $G(S_{REF}, \theta_{REF})$ est le gain d'antenne introduit par le faisceau dans lequel est émis le signal pilote de référence $S_{REF}$ pour des signaux radioélectriques à destination de la zone de couverture 300,
- $ATT_{REEL}(UE)$ est l'atténuation réelle subie entre le satellite 20 et le terminal terrestre 32, qui varie d'un terminal terrestre à un autre (exprimée en dB, la valeur de $ATT_{REEL}(UE)$ est négative).

De manière non limitative, on considère que la puissance d'émission de référence $P'_{TX\_REF}$ est la même pour tous les signaux pilotes $S'_x$, et qu'elle est en outre connue de la composante terrestre. Rien n'exclut, suivant un autre exemple non limitatif, de calculer le niveau potentiel d'interférence du terminal terrestre considéré à la puissance d'émission de référence $P'_{TX\_REF}$ près. Rien n'exclut, en outre, d'avoir $P'_{TX\_REF}$ égal à $P_{TX\_REF}$.

Le gain d'antenne $G(S_{REF}, \theta_{REF})$ peut être estimé. Par exemple, la station de base 30 (en tant qu'équipement de référence) peut mesurer le niveau de réception du signal pilote de référence $S_{REF}$ :

$$P_{LOS}(S_{REF}) = P'_{TX\_REF} + G(S_{REF}, \theta_{REF}) + ATT_{LOS}$$

Ensuite, l'estimation $G_{EST}(S_{REF}, \theta_{REF})$ peut être déterminée suivant l'expression suivante :

$$G_{EST}(S_{REF}, \theta_{REF}) = P_{LOS}(S_{REF}) - P'_{TX\_REF} - ATT_{LOS}$$

Le niveau potentiel d'interférence du terminal terrestre 32 est par exemple déterminé, au cours de la sous-étape 522, suivant l'expression :

$$IPP(UE) = PIRE(UE) + P_{REEL} - P'_{TX\_REF} - G_{EST}(S_{REF}, \theta_{REF})$$

ce qui revient à :

$$IPP(UE) = PIRE(UE) + ATT_{REEL}(UE)$$

expressions dans lesquelles :

- IPP(UE) est le niveau potentiel d'interférence du terminal terrestre,
- PIRE(UE) est la puissance de rayonnement (« puissance isotrope rayonnée équivalente » ou PIRE) estimée du terminal terrestre 32.

Dans une alternative, pour la mesure du niveau de réception réel $P_{REEL}$, à l'envoi de signaux pilotes $S'_x$ (x = 1 à 9) spécifiques dans chacun des faisceaux, un même signal pilote global $S'_0$ peut être simultanément envoyé dans tous les faisceaux, le niveau de réception réel $P_{REEL}$ étant alors le niveau de réception mesuré pour ledit signal pilote global $S'_0$. Le cas échéant, la station de base 30 (en tant qu'équipement de référence) mesure également le niveau de réception du signal pilote global $S'_0$ pour estimer la contribution du gain d'antenne. Dans une variante, le signal pilote global $S'_0$ est émis dans un faisceau global dont la zone de couverture englobe les zones de couverture des faisceaux utilisant les canaux fréquentiels Fx (x = 1 à 9).

Comparaison des niveaux maximaux d'interférences autorisés avec le niveau d'interférence potentiel du terminal terrestre

Au cours de l'étape 53, le niveau maximal d'interférence autorisé dans un canal fréquentiel montant donné est comparé au niveau potentiel d'interférence du terminal terrestre 32. Cette étape de comparaison est effectuée pour chaque canal fréquentiel montant dont on cherche à déterminer s'il peut être utilisé pour des communications terrestres.
Par exemple, le canal fréquentiel montant Fxu (x = 1 à 9) est considéré comme utilisable par le terminal terrestre 32 pour échanger des données avec la station de base 30 si la relation suivante est vérifiée :

$$IPP(UE) < IPP_{MAX}(Fxu)$$

On élimine ainsi, pour un terminal terrestre 32 donné, tous les canaux fréquentiels montants dont l'utilisation pourrait perturber le bon fonctionnement du satellite 20.

Mode préféré de mise en oeuvre du procédé 50 d'identification

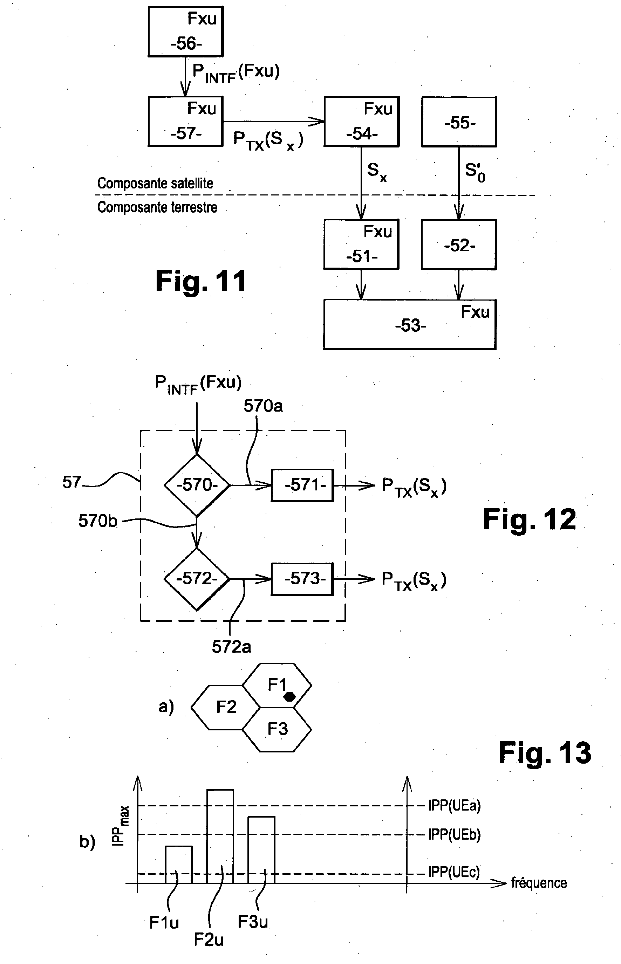

La figure 11 représente schématiquement un mode préféré de mise en oeuvre du procédé 50 d'identification.
Dans ce mode de mise en oeuvre, des niveaux maximaux d'interférence autorisés sont estimés en fonction de niveaux de réception de référence mesurés pour des signaux pilotes $S_x$ (x = 1 à 9) spécifiques prédéfinis émis dans les faisceaux du satellite. Pour chaque faisceau, le procédé 50 d'identification comporte une étape 54 d'émission dans ce faisceau du signal pilote $S_x$ correspondant.
En outre, le niveau potentiel d'interférence du terminal terrestre 32 est estimé en fonction du niveau de réception réel mesuré pour un signal pilote global $S'_0$. A cet effet, le procédé 50 d'identification comporte une étape 55 d'émission du signal pilote global $S'_0$ dans tous les faisceaux ou dans un faisceau global dont la zone de couverture englobe les zones de couverture desdits faisceaux.
Dans le mode illustré par la figure 11, le procédé 50 d'identification comporte également, pour chaque canal fréquentiel montant considéré, les étapes suivantes :

- 56 mesure, par le satellite 20 ou la station sol 21, du niveau agrégé d'interférences générées par des terminaux terrestres 32 utilisant ce canal fréquentiel montant, dit « niveau réel d'interférence »,
- 57 actualisation de la puissance d'émission du signal pilote $S_x$ associé à ce canal fréquentiel montant.

La figure 12 représente un exemple nullement limitatif d'étape 57 d'actualisation de la puissance d'émission d'un signal pilote $S_x$.

Tel qu'illustré par la figure 12, l'étape 57 d'actualisation comporte une sous-étape 570 de détermination si le niveau réel d'interférence $P_{INTF}$(Fxu) mesuré dans le canal fréquentiel montant Fxu dans le faisceau associé au signal pilote $S_x$ est supérieur à une première valeur seuil V1 prédéfinie, par exemple égale au niveau d'interférence de référence $I_{REF}$.

Lorsque le niveau réel d'interférence est supérieur à la première valeur seuil V1 (référence 570a sur la figure 12), l'étape 57 d'actualisation comporte une sous-étape 571 d'augmentation de la puissance d'émission du signal pilote $S_x$ considéré d'une valeur $\Delta P$ prédéfinie (par exemple égale à 1 dB ou 2 dB).

Lorsque le niveau réel d'interférence est égal ou inférieur à la valeur seuil V1 (référence 570b), l'étape 57 d'actualisation comporte une sous-étape 572 de détermination si le niveau réel d'interférence mesuré dans le faisceau associé au signal pilote $S_x$ considéré est inférieur à une seconde valeur seuil V2 prédéfinie, strictement inférieure à la première valeur seuil V1.

Lorsque le niveau réel d'interférence est inférieur à la seconde valeur seuil V2 (référence 572a), l'étape 57 d'actualisation comporte une sous-étape 573 de diminution de la puissance d'émission du signal pilote $S_x$ considéré d'une valeur $\Delta'P$ prédéfinie (par exemple égale à la valeur $\Delta'P$).

Lorsque le niveau réel d'interférence est égal ou supérieur à la seconde valeur seuil V2, la puissance d'émission du signal pilote $S_x$ considéré n'est pas modifiée.

Il est à noter que l'estimation du niveau potentiel d'interférence d'un terminal terrestre 32 permet d'assurer que ce terminal terrestre 32 ne génèrera pas à lui seul trop d'interférences vis-à-vis du satellite 20. Toutefois, il se peut que des terminaux terrestres 32 différents utilisent le même canal fréquentiel satellite montant, par exemple lorsque ces terminaux terrestres 32 se trouvent dans des zones de couverture de stations de base 30 différentes. Les interférences générées par chacun de ces terminaux terrestres 32 vont donc se cumuler au niveau du satellite 30 de sorte que le niveau réel d'interférence pourra s'avérer supérieur au niveau d'interférence de référence $I_{REF}$, même lorsque celui-ci prévoit déjà une marge pour pallier ce cumul.

Les étapes 56 de mesure et 57 d'actualisation de la puissance d'émission des signaux pilotes $S_x$ permettent de mieux contrôler les interférences subies par le satellite 20 du fait de l'utilisation de canaux fréquentiels satellite montants par des terminaux terrestres 32 pour des communications terrestres. En effet, on comprend que, lorsque le niveau réel d'interférence mesuré est supérieur au niveau d'interférence de référence $I_{REF}$, la puissance d'émission du signal pilote $S_x$ correspondant sera augmentée. Il en découlera alors que le niveau maximal d'interférence autorisé sera quant à lui réduit comme indiqué ci-après.

En effet, dans ce cas le niveau de réception de référence peut s'exprimer :

$$P_{LOS}(S_x) = P_{TX}(S_x) + G(Fxd, \theta_{Fx}) + ATT_{LOS}$$

expression dans laquelle :

- $P_{LOS}(Sx)$ est le niveau de réception en visibilité directe du signal pilote considéré $S_x$,
- $P_{TX}(S_x)$ est la puissance d'émission du signal pilote $S_x$, qui peut être différente de la puissance d'émission de référence $P_{TX\_REF}$.

Par conséquent l'estimation $G_{EST}(Fxu, \theta_{Fx})$, déterminée suivant l'expression (2) ci-dessus, sera égale à :

$$G_{EST}(Fxu, \theta_{Fx}) = G(Fxd, \theta_{Fx}) - P_{TX\_REF} + P_{TX}(S_x)$$

et le niveau maximal d'interférence autorisé dans le canal fréquentiel Fxu sera égal à :

$$IPP_{MAX}(Fxu, \theta_{Fx}) = I_{REF} - G(Fxd, \theta_{Fx}) + P_{TX\_REF} - P_{TX}(S_x)$$

On comprend donc qu'une augmentation de la puissance d'émission $P_{TX}(S_x)$ du signal pilote $S_x$ associé au canal fréquentiel Fxu conduit à diminuer le niveau maximal d'interférence autorisé dans ce canal fréquentiel montant: Ce canal fréquentiel montant ne sera plus utilisables par certains terminaux terrestres 32, de sorte que le niveau réel d'interférence subi par le satellite 20 diminuera.

Ainsi, un meilleur contrôle des interférences subies par le satellite 20 est obtenu. On note en outre les avantages suivants :

- le contrôle du niveau des interférences peut se faire individuellement faisceau par faisceau, dans la mesure où il est possible de ne modifier la puissance d'émission que du signal pilote $S_x$ du faisceau dans lequel le niveau réel d'interférence mesuré est trop important,
- ce contrôle est obtenu sans interconnexion entre la composante satellite et la composante terrestre,
- lorsqu'un canal fréquentiel montant n'est pas utilisé par un terminal satellite, il est possible de baisser, dans le faisceau associé à ce canal fréquentiel montant, la puissance d'émission $P_{TX}(S_x)$ du signal pilote correspondant au minimum (y compris jusqu'à considérer une puissance d'émission nulle), ce qui aura pour effet d'augmenter le niveau maximal d'interférence autorisé dans ce canal fréquentiel montant et par conséquent d'en favoriser la réutilisation pour des communications terrestres.

Dans un exemple de mise en oeuvre alternative, l'étape 57 d'actualisation de la puissance d'émission des signaux pilotes est remplacée par une étape d'actualisation de la valeur du niveau d'interférence de référence $I_{REF}$ en fonction des mesures de niveaux réels d'interférences effectuées par la composante satellite. Par exemple, si le niveau réel d'interférence mesuré est supérieur à la première valeur seuil V1, dans ce cas on diminuerait directement la valeur du niveau d'interférence de référence $I_{REF}$, ce qui conduirait également à une diminution du niveau d'interférence maximal autorisé. Toutefois, cet exemple de mise en oeuvre alternative nécessite une coordination entre la composante satellite (qui mesure les niveaux réels d'interférences) et la composant terrestre (qui utilise le niveau d'interférence de référence $I_{REF}$).

Procédé d'allocation de canaux fréauentiels

Le procédé 50 d'identification de canaux fréquentiels satellite montants pouvant être utilisés pour des communications terrestres peut être combiné à tout type de procédé d'allocation de ressources.

La figure 13 représente schématiquement un exemple d'allocation de canaux fréquentiels satellite montants.

La partie a) de la figure 13 représente un motif comportant trois faisceaux utilisant les canaux fréquentiels F1 = (F1d, F1u), F2 = (F2d, F2u) et F3 = (F3d, F3u), ainsi que la zone de couverture 300 de la station de base 30, qui se trouve dans la zone géographique desservie par le faisceau satellite utilisant le canal fréquentiel F1.

La partie b) de la figure 13 représente, sous la forme d'histogrammes, les niveaux maximaux d'interférences autorisés IPP$_{MAx}$ dans chacun des canaux fréquentiels F1u, F2u et F3u, ainsi que les niveaux potentiels d'interférence estimés pour trois terminaux terrestres : un premier terminal terrestre 32a (niveau potentiel d'interférence désigné par IPP(UEa)), un second terminal terrestre 32b (IPP(UEb)) et un troisième terminal terrestre 32c (IPP(UEc)).

Tel qu'illustré par la partie b) de la figure 13 :

- les canaux fréquentiels montants utilisables par le premier terminal terrestre 32a sont les canaux fréquentiels F1u, F2u et F3u,
- les canaux fréquentiels montants utilisables par le second terminal terrestre 32b sont les canaux fréquentiels F2u et F3u,
- le seul canal fréquentiel montant utilisable par le troisième terminal terrestre 32c est le canal fréquentiel F2u.

Par conséquent, il est possible d'allouer le canal fréquentiel F2u au troisième terminal terrestre 32c. Dès lors, il faut allouer le canal fréquentiel F3u au second terminal terrestre 32b, et le canal fréquentiel F1 u au premier terminal terrestre 32a. D'autres solutions pourraient être envisagées, comme par exemple allouer un canal fréquentiel réservé aux communications terrestres au troisième terminal terrestre 32c, dans la mesure où celui-ci a le niveau potentiel d'interférence le plus fort vis-à-vis du satellite 20. Si le troisième terminal terrestre 32c est un terminal bi-mode, il pourrait alternativement être forcé à communiquer directement avec le satellite 20.

Il est à noter que, dans le cas de communications satellite montantes et descendantes multiplexées en fréquence (FDD), et dans le cas où la même organisation est conservée pour les communications terrestres montantes et descendantes, l'allocation d'un canal fréquentiel montant (par exemple F1 u) à un terminal terrestre 32, entraine de préférence l'allocation du canal fréquentiel descendant apparié (c'est-à-dire F1d) à la station de base 30. La limitation des interférences au niveau du satellite 20 s'accompagnera généralement d'une limitation des interférences au niveau du terminal terrestre 32 pour les communications descendantes dans la mesure où un niveau d'interférence potentiel d'un terminal terrestre est faible si :

- l'atténuation entre le satellite 20 et le terminal terrestre 32 est forte : par conséquent les signaux radioélectriques émis par le satellite 20 seront également fortement atténués, et/ou
- la puissance d'émission du terminal terrestre 32 est faible : cela traduit généralement une proximité avec la station de base 30 et/ou une absence d'obstacles entre ladite station de base et le terminal terrestre 32, de sorte que le niveau de réception des signaux radioélectriques émis par ladite station de base sera généralement très supérieure aux interférences générées par le satellite 20.

En outre, il est possible d'allouer aux terminaux terrestres 32 les plus proches de la station de base 30 (puissance d'émission estimée faible ou niveau de réception des signaux radioélectriques émis par la station de base 30 élevé), les canaux fréquentiels descendants dans lesquels le satellite 20 est susceptible de générer les interférences les plus importantes (niveau de réception réel élevé).

Variantes de l'invention

De manière plus générale, la portée de la présente invention ne se limite pas aux modes de mise en oeuvre et de réalisation décrits ci-dessus à titre d'exemples non limitatifs, mais s'étend au contraire à toutes les modifications à la portée de l'homme de l'art.

Notamment, il est à noter que l'invention, décrite dans le cadre d'une réutilisation de canaux fréquentiels satellite pour des communications terrestre, est applicable de manière générale à tout type de ressource de multiplexage.

Par « ressource de multiplexage » on entend les moyens permettant de multiplexer les communications montantes de faisceaux adjacents du satellite. Ainsi une ressource de multiplexage correspond à un canal fréquentiel, éventuellement combiné à d'autres moyens pouvant être mis en oeuvre pour distinguer les communications montantes de faisceaux adjacents du satellite.

Suivant un premier exemple, détaillé ci-avant, des faisceaux adjacents utilisent des canaux fréquentiels différents. Dans ce cas, une ressource fréquentielle correspond uniquement à un canal fréquentiel donné.

Suivant un second exemple non limitatif, des faisceaux adjacents utilisent un même canal fréquentiel. Toutefois, deux faisceaux adjacents utilisent deux familles de codes d'étalement CDMA différents pour distinguer leurs communications montantes. Une ressource fréquentielle correspond alors à un canal fréquentiel donné combiné à un code d'étalement donné.

La notion de « ressource de multiplexage » peut également être étendue, au sein d'un même faisceau, aux moyens permettant de distinguer les différents blocs de ressources attribués à des terminaux différents. En effet, si la composante terrestre utilise le même découpage en blocs de ressources que la composante satellite, l'invention peut être mise en oeuvre pour déterminer directement les blocs de ressources pouvant être utilisés pour les communications terrestres.

Suivant un premier exemple, si des faisceaux adjacents utilisent des canaux fréquentiels différents, et si les blocs de ressources correspondent à des sous-canaux fréquentiels, il sera possible de déterminer, dans chaque canal fréquentiel considéré, quels sous-canaux fréquentiels peuvent être utilisés pour les communications terrestres.

Suivant un second exemple non limitatif, si des faisceaux adjacents utilisent des canaux fréquentiels différents, et si les blocs de ressources correspondent à des codes d'étalement CDMA, il sera possible de déterminer, dans chaque canal fréquentiel considéré, quels codes d'étalement CDMA peuvent être utilisés pour les communications terrestres.

Il est également à noter que l'invention, décrite dans le cadre d'un multiplexage fréquentiel des communications montantes et descendantes (FDD) est applicable de manière générale à tout type de multiplexage des communications montantes et descendantes. Suivant un autre exemple, l'invention est applicable à un multiplexage temporel (connu sous l'acronyme TDD pour « Time Division Duplex »), dans lequel un même canal fréquentiel est utilisé à la fois pour communications montantes et descendantes.

En outre, l'invention est également applicable à un satellite placé sur une orbite non géostationnaire, telle qu'une orbite basse LEO (« Low Earth Orbit ») ou une orbite moyenne MEO (« Medium Earth Orbit »).

De plus, l'invention est applicable à tout type de système de télécommunications terrestre, tel que les systèmes GSM, UMTS, CDMA 2000, LTE, WiMax, etc. En outre, cette invention peut également s'appliquer à des systèmes de diffusion terrestre qui souhaiterait opérer en partie dans les bandes satellite autorisées.

L'invention trouve une application tout à fait avantageuse dans les systèmes de télécommunications terrestres utilisant une interface air du type OFDMA (« Orthogonal Frequency Division Multiple Access ») ou MF/TDMA (« Multiple Frequency/TDMA »), dans la mesure où de telles interfaces air permettent une allocation dynamique des canaux fréquentiels. En effet, les opérations décrites ci-avant, en particulier les mesures de niveaux de réception en visibilité directe et/ou les niveaux de réception potentiels peuvent être effectuées de manière périodique en vue d'allouer dynamiquement les canaux fréquentiels, pour tenir compte par exemple du déplacement du terminal terrestre 32 ou du satellite 20 (dans le cas d'une orbite défilante), etc.

La description ci-avant illustre clairement que par ses différentes caractéristiques et leurs avantages, la présente invention atteint les objectifs qu'elle s'était fixés.

En particulier, le contrôle des interférences subies par le satellite 20 est obtenu notamment en n'autorisant pas l'utilisation de canaux fréquentiels dans lesquels le niveau potentiel d'interférence d'un terminal terrestre 32 est supérieur au niveau maximal d'interférence autorisé.

En outre, l'invention peut être mise en oeuvre de façon transparente pour le système satellite, sans nécessiter de coordination avec le système de télécommunications terrestre, mais simplement en mesurant les niveaux de réception de signaux radioélectriques émis par le satellite par le terminal terrestre 32 et par un équipement terrestre en conditions de visibilité directe avec le satellite 20.

**Revendications**

1. Procédé (50) d'identification de ressources de multiplexage montantes d'un satellite (20) multifaisceaux pouvant être utilisées dans un système de télécommunications terrestre par une station émettrice pour émettre des signaux radioélectriques vers une station réceptrice, dans lequel :

   - ladite station émettrice ou ladite station réceptrice est une station de base (30) ayant une portée délimitant une zone de couverture dans laquelle se trouve ladite station émettrice,
   - des faisceaux différents du satellite (20) utilisent des ressources de multiplexage montantes différentes,

   **caractérisé en ce que** ledit procédé comporte, pour chaque ressource de multiplexage montante considérée, des étapes de :

   - (51) estimation d'un niveau maximal d'interférence autorisé vis-à-vis du satellite pour cette ressource de multiplexage montante pour des signaux radioélectriques émis depuis la zone de couverture,
   - (520) estimation de la puissance avec laquelle les signaux radioélectriques seront émis par la station émettrice, dite « puissance de rayonnement »,
   - (521) mesure, par la station émettrice, du niveau de réception de signaux radioélectriques émis par le satellite (20), dit « niveau de réception réel »,
   - (522) détermination d'un niveau potentiel d'interférence de la station émettrice en fonction du niveau de réception réel mesuré et de la puissance de rayonnement estimée de ladite station émettrice,
   - (53) détermination si cette ressource de multiplexage montante est utilisable par la station émettrice par comparaison du niveau potentiel d'interférence de la station émettrice avec le niveau maximal d'interférence autorisé pour cette ressource de multiplexage montante.

2. Procédé (50) selon la revendication 1, **caractérisé en ce que**, pour chaque ressource de multiplexage montante considérée, l'étape (51) d'estimation du niveau maximal d'interférence autorisé comprend des sous-étapes de :

   - (510) mesure, par un équipement terrestre se trouvant dans la zone de couverture dans des conditions de visibilité prédéterminées avec le satellite (20), dit « équipement de référence », du niveau de réception de signaux radioélectriques émis par le satellite (20) dans le faisceau utilisant cette ressource de multiplexage montante, dit « niveau de réception de référencé »,
   - (512) détermination du niveau maximal d'interférence autorisé pour cette ressource de multiplexage montante en fonction du niveau de réception de référence mesuré pour cette ressource de multiplexage montante.

3. Procédé (50) selon la revendication 2, **caractérisé en ce que**, pour chaque ressource de multiplexage montante considérée :

   - ledit procédé comporte une étape (54) d'émission par le satellite (20), dans le faisceau utilisant cette ressource de multiplexage montante, d'un signal pilote $S_x$ spécifique associé à cette ressource de multiplexage montante,
   - le niveau de réception de référence pour cette ressource de multiplexage montante correspond au niveau de réception du signal pilote $S_x$ associé à cette ressource de multiplexage montante.

4. Procédé (50) selon la revendication 3, **caractérisé en ce qu'**il comporte, pour chaque ressource de multiplexage montante considérée, des étapes de :

- (56) mesure du niveau d'interférence généré par des stations émettrices utilisant cette ressource de multiplexage montante, dit « niveau réel d'interférence »,
- (57) actualisation de la puissance d'émission du signal pilote $S_x$ associé à cette ressource de multiplexage montante, au cours de laquelle ladite puissance d'émission dudit signal pilote $S_x$ est ajustée en fonction du niveau réel d'interférence mesuré pour cette ressource de multiplexage montante.

**5.** Procédé (50) selon l'une des revendications 2 à 4, **caractérisé en ce que** l'équipement de référence mis en oeuvre pour mesurer le niveau de réception de référence est la station de base (30).

**6.** Procédé (50) selon l'une des revendications précédentes, **caractérisé en ce que** :

- ledit procédé comporte une étape (55) d'émission d'un signal pilote $S'_x$ spécifique associé à chaque faisceau du satellite (20),
- le niveau de réception réel pour la station émettrice correspond au niveau de réception maximal mesuré par ladite station émettrice pour tous les signaux pilotes.

**7.** Procédé (50) selon l'une des revendications 1 à 5, **caractérisé en ce que** :

- ledit procédé comporte une étape (55) d'émission d'un même signal pilote global $S'_o$ dans plusieurs faisceaux du satellite ou dans un faisceau global englobant plusieurs faisceaux dudit satellite,
- le niveau de réception réel pour la station émettrice correspond au niveau de réception du signal pilote global $S'_o$.

**8.** Système de télécommunications terrestres comportant une station émettrice et une station réceptrice adaptées à échanger des données en utilisant des ressources de multiplexage montantes d'un satellite (20) multifaisceaux, ladite station émettrice ou ladite station réceptrice est une station de base (30) ayant une portée délimitant une zone de couverture (300) dans laquelle se trouve ladite station émettrice, **caractérisé en ce qu'**il comporte :

- des moyens adaptés à estimer, pour chaque ressource de multiplexage montante considérée, un niveau maximal d'interférence autorisé vis-à-vis du satellite pour des signaux radioélectriques émis depuis la zone de couverture (300),
- des moyens adaptés à estimer la puissance avec laquelle les signaux radioélectriques seront émis par la station émettrice, dite « puissance de rayonnement »,
- des moyens adaptés à mesurer un niveau de réception par la station émettrice de signaux radioélectriques émis par le satellite, dit « niveau de réception réel »,
- des moyens adaptés à déterminer un niveau potentiel d'interférence de la station émettrice en fonction du niveau de réception réel mesuré et de la puissance de rayonnement estimée,
- des moyens adaptés à déterminer si une ressource de multiplexage montante est utilisable par la station émettrice par comparaison du niveau potentiel d'interférence de la station émettrice avec le niveau maximal d'interférence autorisé pour cette ressource de multiplexage montante.

**9.** Système selon la revendication 8, **caractérisé en ce que** les moyens d'estimer un niveau maximal d'interférence autorisé pour chaque ressource de multiplexage montante comportent un équipement terrestre se trouvant ou pouvant être placé dans la zone de couverture (300) dans des conditions de visibilité prédéterminées avec le satellite (20), dit « équipement de référence », ledit équipement de référence comportant des moyens adaptés à mesurer des niveaux de réception de signaux radioélectriques émis dans des ressources de multiplexage descendantes du satellite (20).

**10.** Système selon la revendication 9, **caractérisé en ce que** l'équipement de référence est la station de base (30).

**11.** Système (10) de télécommunications intégré comportant une composante spatiale comportant un satellite (20) multifaisceaux et une composante terrestre, **caractérisé en ce que** la composante terrestre est conforme à un système de télécommunications terrestres selon l'une des revendications 8 à 10.

**12.** Système (10) selon la revendication 11, **caractérisé en ce que** la composante spatiale comporte des moyens adaptés à émettre un signal pilote spécifique dans chaque faisceau du satellite (20).

**13.** Système (10) selon la revendication 12, **caractérisé en ce que** la composante spatiale comporte des moyens adaptés à actualiser la puissance d'émission de chaque signal pilote en fonction de mesures du niveau d'interférences agrégées des stations émettrices utilisant des ressources de multiplexage montantes, dit « niveau réel d'interférence », lesdits moyens étant configurés pour ajuster la puissance d'émission du signal pilote associé à une ressource de multiplexage montante en fonction du niveau réel d'interférence mesuré dans cette ressource de multiplexage montante.

14. Système (10) selon la revendication 11, **caractérisé en ce que** le satellite (20) comporte des moyens adaptés à émettre un même signal pilote global dans plusieurs faisceaux du satellite ou dans un faisceau global englobant plusieurs faisceaux dudit satellite.

**Patentansprüche**

1. Verfahren (50) zum Identifizieren von aufsteigenden Multiplexierungsbetriebsmitteln eines Mehrfachbündel-Satelliten (20), die in einem terrestrischen Telekommunikationssystem von einer Sendestation verwendet werden können, um funkelektrische Signale zu einer Empfangsstation zu senden, wobei:

   - die Sendestation oder die Empfangsstation eine Basisstation (30) ist, die eine Reichweite besitzt, die eine Abdeckzone begrenzt, in der sich die Sendestation befindet,
   - verschiedene Bündel des Satelliten (20) verschiedene aufsteigende Multiplexierungsbetriebsmittel verwenden,

   **dadurch gekennzeichnet, dass** das Verfahren für jedes betrachtete aufsteigende Multiplexierungsbetriebsmittel die folgenden Schritte umfasst:

   - (51) Schätzen eines in Bezug auf den Satelliten maximal zulässigen Störpegels für dieses aufsteigende Multiplexierungsbetriebsmittel für funkelektrische Signale, die von der Abdeckzone ausgesendet werden, (520) Schätzen der Leistung, mit der die funkelektrischen Signale von der Sendestation ausgesendet werden, die "Strahlungsleistung" genannt wird,
   - (521) Messen durch die Sendestation des Empfangspegels der funkelektrischen Signale, die von dem Satelliten (20) ausgesendet werden, der "wahrer Empfangspegel" genannt wird,
   - (522) Bestimmen eines potentiellen Störpegels der Sendestation als Funktion des gemessenen wahren Empfangspegels und der geschätzten Strahlungsleistung der Sendestation,
   - (53) Bestimmen, ob dieses aufsteigende Multiplexierungsbetriebsmittel von der Sendestation verwendet werden kann, durch Vergleichen des potentiellen Störpegels der Sendestation mit dem für dieses aufsteigende Multiplexierungsbetriebsmittel zulässigen maximalen Störpegel.

2. Verfahren (50) nach Anspruch 1, dadurch gekenntzeichnet, dass für jedes betrachtete aufsteigende Multiplexierungsbetriebsmittel der Schritt (51) des Schätzens des zulässigen maximalen Störpegels die folgenden Unterschritte umfasst:

   - (510) Messen durch eine terrestrische Anlage, die sich in der Abdeckzone unter vorgegebenen Sichtbedingungen mit dem Satelliten (20) befindet und "Referenzanlage" genannt wird, des Empfangspegels von funkelektrischen Signalen, die von dem Satelliten (20) in dem von diesem aufsteigenden Multiplexierungsbetriebsmittel verwendeten Bündel ausgesendet werden, der "Referenzempfangspegel" genannt wird,
   - (512) Bestimmen des für dieses aufsteigende Multiplexierungsbetriebsmittel zulässigen maximalen Störpegels als Funktion des für dieses aufsteigende Multiplexierungsbetriebsmittel gemessenen Referenzempfangspegels.

3. Verfahren (50) nach Anspruch 2, **dadurch gekennzeichnet, dass** für jedes betrachtete aufsteigende Multiplexierungsbetriebsmittel:

   - das Verfahren einen Schritt (54) des Aussendens durch den Satelliten (20) in dem dieses aufsteigende Multiplexierungsbetriebsmittel verwendenden Bündel eines spezifischen Pilotsignals ($S_x$), das diesem aufsteigenden Multiplexierungsbetriebsmittel zugeordnet ist, umfasst,
   - der Referenzempfangspegel für dieses aufsteigende Multiplexierungsbetriebsmittel dem Empfangspegel des Pilotsignals ($S_x$), das diesem aufsteigenden Multiplexierungsbetriebsmittel zugeordnet ist, entspricht.

4. Verfahren (50) nach Anspruch 3, **dadurch gekennzeichnet, dass** es für jedes betrachtete aufsteigende Multiplexierungsbetriebsmittel die folgenden Schritte umfasst:

- (56) Messen des durch die Sendestationen erzeugten Störpegels unter Verwendung dieses aufsteigenden Multiplexierungsbetriebsmittels, der "wahrer Störpegel" genannt wird,
- (57) Aktualisieren der Sendeleistung des Pilotsignals ($S_x$), das diesem aufsteigenden Multiplexierungsbetriebsmittel zugeordnet ist, in dessen Verlauf die Sendeleistung des Pilotsignals ($S_x$) als Funktion des für dieses aufsteigende Multiplexierungsbetriebsmittel gemessenen wahren Störpegels eingestellt wird.

5. Verfahren (50) nach einem der Ansprüche 2 bis 4, **dadurch gekennzeichnet, dass** die Referenzanlage, die betrieben wird, um den Referenzempfangspegel zu messen, die Basisstation (30) ist.

6. Verfahren (50) nach einem der vorhergehenden Ansprüche, dadurch gekenntzeichnet, dass:

- das Verfahren einen Schritt (55) des Sendens eines spezifischen Pilotsignals ($S'_x$), das jedem Bündel des Satelliten (20) zugeordnet ist, umfasst,
- der wahre Empfangspegel für die Sendestation dem maximalen Empfangspegel entspricht, der von der Sendestation für sämtliche Pilotsignale gemessen wird.

7. Verfahren (50) nach einem der Ansprüche 1 bis 5, **dadurch gekennzeichnet, dass**:

- das Verfahren einen Schritt (55) des Sendens desselben globalen Pilotsignals $S'_o$ in mehreren Bündeln des Satelliten oder in einem globalen Bündel, das mehrere Bündel des Satelliten einschließt, umfasst
- der wahre Empfangspegel für die Sendestation dem Empfangspegel des globalen Pilotsignals $S'_o$ entspricht.

8. System für terrestrische Telekommunikation, das eine Sendestation und eine Empfangsstation umfasst, die dafür ausgelegt sind, Daten unter Verwendung aufsteigender Multiplexierungsbetriebsmittel eines Mehrfachbündel-Satelliten (20) auszutauschen, wobei die Sendestation oder die Empfangsstation eine Basisstation (30) ist, die eine Reichweite besitzt, die eine Abdeckzone (300) begrenzt, in der sich die Sendestation befindet, **dadurch gekennzeichnet, dass** es Folgendes umfasst:

- Mittel, die dafür ausgelegt sind, für jedes betrachtete aufsteigende Multiplexierungsbetriebsmittel einen maximalen Störpegel, der in Bezug auf den Satelliten zulässig ist, für funkelektrische Signale, die von der Abdeckzone (300) ausgesendet werden, zu schützen,
- Mittel, die dafür ausgelegt sind, die Leistung, mit der die funkelektrischen Signale von der Sendestation ausgesendet werden, die "Strahlungsleistung" genannt wird, zu schätzen,
- Mittel, die dafür ausgelegt sind, einen Empfangspegel durch die Sendestation funkelektrischer Signale, die von dem Satelliten ausgesendet werden, der "wahrer Empfangspegel" genannt wird, zu messen,
- Mittel, die dafür ausgelegt sind, einen potentiellen Störpegel der Sendestation als Funktion des gemessenen wahren Empfangspegels und der geschätzten Strahlungsleistung zu bestimmen,
- Mittel, die dafür ausgelegt sind, zu bestimmen, ob ein aufsteigendes Multiplexierungsbetriebsmittel von der Sendestation verwendet werden kann, durch Vergleichen des potentiellen Störpegels der Sendestation mit dem maximalen Störpegel, der für dieses aufsteigende Multiplexierungsbetriebsmittel zulässig ist.

9. System nach Anspruch 8, **dadurch gekennzeichnet, dass** die Mittel zum Schätzen eines maximalen Störpegels, der für jedes aufsteigende Multiplexierungsbetriebsmittel zulässig ist, eine terrestrische Anlage umfassen, die sich in der Abdeckzone (300) unter vorgegebenen Sichtbedingungen mit dem Satelliten (20) befindet oder befinden kann, die "Referenzanlage" genannt wird, wobei die Referenzanlage Mittel umfasst, die dafür ausgelegt sind, Empfangspegel von funkelektrischen Signalen, die in absteigenden Multiplexierungsbetriebsmitteln des Satelliten (20) ausgesendet werden, zu messen.

10. System nach Anspruch 9, **dadurch gekennzeichnet, dass** die Referenzanlage die Basisstation (30) ist.

11. Integriertes Telekommunikationssystem (10), das eine Weltraumkomponente, die einen Mehrfachbündel-Satelliten (20) umfasst, und eine terrestrische Komponente enthält, dadurch gekenntzeichnet, dass die terrestrische Komponente in übereinstimmung mit einem System für terrestrische Telekommunikation nach einem der Ansprüche 8 bis 10 ist.

12. System (10) nach Anspruch 11, **dadurch gekennzeichnet, dass** die Weltallkomponente Mittel umfasst, die dafür ausgelegt sind, ein spezifisches Pilotsignal in jedem Bündel des Satelliten (20) auszusenden.

13. System (10) nach Anspruch 12, **dadurch gekennzeichnet, dass** die Weltallkomponente Mittel enthält, die dafür ausgelegt sind, die Sendeleistung jedes Pilotsignals als Funktion von Messungen des Pegels angesammelter Störungen der Sendestationen unter Verwendung aufsteigender Multiplexierungsbetriebsmittel, der "wahrer Störpegel" genannt wird, zu aktualisieren, wobei die Mittel konfiguriert sind, die Sendeleistung des Pilotsignals, das einem aufsteigenden Multiplexierungsbetriebsmittel zugeordnet ist, als Funktion des wahren Störpegels, der, in diesem aufsteigenden Multiplexierungsbetriebsmittel gemessen, wird, einzustellen.

14. System (10) nach Anspruch 11, **dadurch gekennzeichnet, dass** der Satellit (20) Mittel umfasst, die dafür ausgelegt sind, dasselbe globale Pilotsignal in mehreren Bünden des Satelliten oder in einem globalen Bündel, das mehrere Bündel des Satelliten einschließt, auszusenden.

**Claims**

1. A method (50) for identifying uplink multiplexing resources of a multibeam satellite (20) that can be used in a terrestrial telecommunications system by a transmitting station to transmit radioelectric signals to a receiving station, in which:

   - said transmitting station or said receiving station is a base station (30) having a range delimiting a zone of coverage in which said transmitting station is situated,
   - different beams of the satellite (20) use different uplink multiplexing resources,

   **characterized in that** said method comprises, for each uplink multiplexing resource considered, steps of:

   - (51) estimation of a maximum interference level authorized with respect to the satellite for this uplink multiplexing resource for radioelectric signals transmitted from the zone of coverage,
   - (520) estimation of the power with which the radioelectric signals will be transmitted by the transmitting station, called the "radiation power",
   - (521) measurement, by the transmitting station, of the level of reception of radioelectric signals transmitted by the satellite (20), called the "real reception level",
   - (522) determination of a potential level of interference of the transmitting station as a function of the real reception level measured and of the estimated radiation power of said transmitting station,
   - (53) determination whether this uplink multiplexing resource is usable by the transmitting station by comparing the potential level of interference of the transmitting station with the maximum interference level authorized for this uplink multiplexing resource.

2. The method (50) as claimed in claim 1, **characterized in that**, for each uplink multiplexing resource considered, step (51) of estimating the maximum interference level authorized comprises sub-steps of

   - (510) measurement, by a terrestrial device situated in the zone of coverage under predetermined conditions of visibility with the satellite (20), called the "reference device", of the level of reception of radioelectric signals transmitted by the satellite (20) in the beam using this uplink multiplexing resource, called the "reference reception level",
   - (512) determination of the maximum interference level authorized for this uplink multiplexing resource as a function of the reference reception level measured for this uplink multiplexing resource

3. The method (50) as claimed in claim 2, **characterized in that**, for each uplink multiplexing resource considered:

   - said method comprises a step (54) of transmission by the satellite (20), in the beam using this uplink multiplexing resource, of a specific pilot signal $S_x$ associated with this uplink multiplexing resource,
   - the reference reception level for this uplink multiplexing resource corresponds to the reception level of the pilot signal $S_x$ associated with this uplink multiplexing resource.

4. The method (50) as claimed in claim 3, **characterized in that** it comprises, for each uplink multiplexing resource considered, steps of:

   - (56) measurement of the interference level generated by transmitting stations using this uplink multiplexing resource, called the "real interference level",
   - (57) updating of the transmission power of the pilot signal $S_x$ associated with this uplink multiplexing resource, in the course of which said transmission power of said pilot signal $S_x$ is adjusted as a function of the real interference level measured for this uplink multiplexing resource.

5. The method (50) as claimed in one of claims 2 to 4, **characterized in that** the reference device implemented to measure the reference reception level is the base station (30).

6. The method (50) as claimed in one of the preceding claims, **characterized in that**:

- said method comprises a step (55) of transmitting a specific pilot signal $S'_x$ associated with each beam of the satellite (20),
- the real reception level for the transmitting station corresponds to the maximum reception level measured by said transmitting station for all the pilot signals.

7. The method (50) as claimed in one of claims 1 to 5, **characterized in that**:

- said method comprises a step (55) of transmitting one and the same global pilot signal $S'_o$ in several beams of the satellite or in a global beam encompassing several beams of said satellite,
- the real reception level for the transmitting station corresponds to the reception level of the global pilot signal $S'_o$.

8. A terrestrial telecommunications system comprising a transmitting station and a receiving station which are adapted to exchange data by using uplink multiplexing resources of a multibeam satellite (20), said transmitting station or said receiving station is a base station (30) having a range delimiting a zone of coverage (300) in which said transmitting station is situated, **characterized in that** it comprises:

- means for estimating, for each uplink multiplexing resource considered, a maximum interference level authorized with respect to the satellite for radioelectric signals transmitted from the zone of coverage (300),
- means for estimating the power with which the radioelectric signals will be transmitted by the transmitting station, called the "radiation power",
- means for measuring a level of reception by the transmitting station of radioelectric signals transmitted by the satellite, called the "real reception level",
- means for determining a potential level of interference of the transmitting station as a function of the measured real reception level and of the estimated radiation power,
- means for determining whether an uplink multiplexing resource is usable by the transmitting station by comparing the potential level of interference of the transmitting station with the maximum interference level authorized for this uplink multiplexing resource.

9. The system as claimed in claim 8, **characterized in that** the means for estimating a maximum interference level authorized for each uplink multiplexing resource comprise a terrestrial device that is situated or that can be placed in the zone of coverage (300) under predetermined conditions of visibility with the satellite (20), called the "reference device", said reference device comprising means for measuring levels of reception of radioelectric signals transmitted in downlink multiplexing resources of the satellite (20).

10. The system as claimed in claim 9, **characterized in that** the reference device is the base station (30).

11. An integrated telecommunications system (10) comprising a space component comprising a multibeam satellite (20) and a terrestrial component, **characterized in that** the terrestrial component complies with a terrestrial telecommunications system as claimed in one of claims 8 to 10.

12. The system (10) as claimed in claim 11, **characterized in that** the space component comprises means for transmitting a specific pilot signal in each beam of the satellite (20).

13. The system (10) as claimed in claim 12, **characterized in that** the space component comprises means for updating the transmission power of each pilot signal as a function of measurements of the level of aggregated interference of the transmitting stations using uplink multiplexing resources, called the "real interference level", said means being configured to adjust the transmission power of the pilot signal associated with an uplink multiplexing resource as a function of the real interference level measured in this uplink multiplexing resource.

14. The system (10) as claimed in claim 11, **characterized in that** the satellite (20) comprises means for transmitting one and the same global pilot signal in several beams of the satellite or in a global beam encompassing several beams of said satellite.

**Fig. 1**

**Fig. 2**

a) Bd      Bu    → fréquence

b)   → fréquence

F1d   F2d   F3d   F4d   F5d   F6d   F7d   F8d   F9d

## Fig. 3

c)

F9   F2   F8

F7   F1   F3

F6   F5   F4

---

Fxu

51 — Estimation du niveau maximal d'interférence autorisé dans la zone de couverture

Estimation du niveau potentiel d'interférence du terminal terrestre — 52

50

53 — Détermination si le canal fréquentiel montant peut être utilisé par le terminal terrestre

Canaux fréquentiel utilisables par le terminal terrestre

## Fig. 4

---

$G(\theta)$

Ls    Ls    Lp    Ls    Ls

$\theta$

## Fig. 5

**Fig. 6**

IPP$_{MAX}$ (Fxu, $\Theta_{Fx}$)

**Fig. 7**

**Fig. 8**

**Fig. 9**

| Estimation de la puissance d'émission du terminal terrestre | | Mesure(s) de niveau de réception potentiel par le terminal terrestre |
|---|---|---|

Détermination du niveau potentiel d'interférence

IPP(UE)   **Fig. 10**

Fig. 11

Fig. 12

Fig. 13

**EP 2 767 010 B1**

## RÉFÉRENCES CITÉES DANS LA DESCRIPTION

**Documents brevets cités dans la description**

- US 20110034166 A